Europäisches Patentamt

European Patent Office

Office européen des brevets

(11) Veröffentlichungsnummer: **0 371 401**
**A1**

## EUROPÄISCHE PATENTANMELDUNG

(21) Anmeldenummer: 89121669.9

(22) Anmeldetag: 23.11.89

(51) Int. Cl.⁵: **H04N 5/268, H04N 7/10, H04N 7/16**

(30) Priorität: 29.11.88 DE 3840254

(43) Veröffentlichungstag der Anmeldung:
**06.06.90 Patentblatt 90/23**

(84) Benannte Vertragsstaaten:
**AT BE CH DE ES FR GB GR IT LI LU NL SE**

(71) Anmelder: **NEUBERGER NACHRICHTEN- UND ANTENNENTECHNIK GMBH**
**Slevogtstrasse 3**
**D-8000 München 70(DE)**

(72) Erfinder: **Neuberger, Robert**
**Slevogtstrasse 3**
**D-8000 München 70(DE)**

(74) Vertreter: **Brehm, Hans-Peter, Dr. Dipl.-Chem. et al**
**Patentanwälte Kern, Brehm & Partner**
**Albert-Rosshaupter-Strasse 73**
**D-8000 München 70(DE)**

(54) **Fernadressierbarer Sternverteiler für Fernsehsignale.**

(57) Zu einem fernadressierbaren Sternverteiler für Fernsehsignale gehören ein erster Eingang, der an eine Fernsehsignale führende Leitung anschließbar ist, und eine Anzahl Ausgänge, an die je eine Teilnehmerleitung anschließbar ist,
wobei jedem Ausgang ein ansteuerbares Schaltmittel zugeordnet ist, das nach Maßgabe zugeführter Steuerbefehle eine HF-Verbindung zwischen dem ersten Eingang und diesem Ausgang herstellt oder unterbricht. Um eine Anzahl Teilnehmer wahlweise mit Fernsehprogrammen aus verschiedenen Quellen zu versorgen, ist am Sternverteiler ein zweiter Eingang (E2) vorhanden, der aus einer anderen Quelle mit Fernsehsignalen versorgbar ist.
Jedes Schaltmittel kann den zugeordneten Ausgang (A1, A2, ... A8) wahlweise mit dem ersten Eingang (E1) oder mit dem zweiten Eingang (E2) verbinden oder von beiden Eingängen (E1, E2( trennen. Jedem Schaltmittel ist ein einstellbarer Adressierchip zugeordnet, der aus einem Strom codierter Steuerbefehle bestimmt codierte Steuerbefehle auswählt und dem Schaltmittel zuführt. Bei den verschiedenen Quellen für Fernsehsignale kann es sich um eine Gemeinschaftsantennenanlage und um den Übergabepunkt eines Breitbandkabelkommunikationsnetzes handeln.

Die Steuerbefehle werden für eine Vielzahl von Teilnehmern von einem Controller erzeugt.

Fig. 1

## Fernadressierbarer Sternverteiler für Fernsehsignale

Die Erfindung betrifft einen fernadressierbaren Sternverteiler, mit einem ersten Eingang, der an eine Fernsehsignale führende Leitung anschließbar ist, mit einer Anzahl Ausgänge, an die je eine Teilnehmerleitung anschließbar ist, wobei jedem Ausgang ein ansteuerbares Schaltmittel zugeordnet ist, das nach Maßgabe zugeführter Steuerbefehle eine Hochfrequenzverbindung zwischen dem ersten Eingang und diesem Ausgang herstellt oder unterbricht.

Ein Sternverteiler dieser Art ist aus der Deutschen Offenlegungsschrift 27 25 250 bekannt. Der bekannte Sternverteiler ist mit einem Mikrocomputer ausgerüstet, der über den HF-Eingang mit codierten Datensignalen versorgt wird und die Steuerbefehle zur Ansteuerung der einzelnen Schaltmittel erzeugt. Mikrocomputer dieser Art sind teuer, und der Schaltungsaufwand ist erheblich, wenn ein einzelnes Schaltmittel mehrere Funktionen ausführen soll.

Ferner ist aus der Deutschen Offenlegungsschrift 31 02 821 ein Vielfachverteiler für Kabelfernsehanlagen mit sternförmigen Netzausläufern bekannt. Die bekannte Anordnung enthält eine erste Kette aus Richtungskopplern, über deren Auskoppelschleifen die Radio- und Fernsehsignale eines unteren Frequenzbandes zu Anschlußbuchsen geführt werden. Weiterhin ist eine zweite Kette vorgesehen, über deren Koppelschleifen Fernsehsignale eines oberen Frequenzban des, für die eine Zusatzgebühr gezahlt werden muß, zu denselben Anschlußbuchsen geleitet werden können. Sofern eine ferngesteuerte An- und Abschaltung der Richtungskoppler-Auskoppelschleife der zweiten Kette beabsichtigt ist, befinden sich die dafür erforderlichen Schaltmittel in den Anschlußdosen der einzelnen Teilnehmer.

Aus der Deutschen Offenlegungsschrift 34 38 907 ist ein Schaltgerät für Videosignale bekannt, das insbesondere zur Verwendung im Computerunterricht vorgesehen ist. Das bekannte Schaltgerät ermöglicht eine Verbindung von einem Lehrer-Computer und mehreren Schüler-Computern mit einer Anzahl Sichtgeräte. Das bekannte Schaltgerät weist je einen Eingang für die verschiedenen Videosignalquellen und je einen Ausgang pro Sichtgerät auf. Ferner ist das bekannte Schaltgerät mit Schaltmitteln ausgerüstet, um auf den Schüler-Sichtgeräten wahlweise die Videosignale der eigenen Computer, des Lehrer-Computers oder gegebenenfalls eines anderen Schüler-Computers darzustellen. Diese Schaltmittel können mit Hilfe von Adressen und Dekodieren angesteuert werden. Die zur Ansteuerung benutzten Adressen und Codes werden innerhalb der Steuerschaltung des bekannten Schaltgerätes erzeugt und benutzt und nicht in Form eines extern erzeugten Stromes codierter Steuerbefehle dem Schaltgerät zugeführt.

In "FErnseh- und Kino-Technik", 32.Jahrgang (1978), Nr. 10, S. 383-387, ist ein ein- oder mehrstufiges, aus mehreren Koppelfeldmoduln aufgebautes Kreuzschaltfeld beschrieben, dessen Schalter über Adresskodierer angesteuert werden. Die zur Ansteuerung der Adresskodierer erforderlichen Steuerbefehle werden wenigstens teilweise extern in einem Prozeßrechner oder Bediengerät erzeugt und über einen BUS zugeführt. Sowohl ein bekanntes Koppelfeldmodul wie ein aus mehreren Koppelfeldmoduln aufgebautes Kreuzschaltfeld ist wegen des Aufwandes an Komponenten und Schaltungstechnik mit einem gattungsgemäßen fernadressierbaren Sternverteiler zur Versorgung einer begrenzten Anzahl von Teilnehmern mit Fernsehsignalen nicht vergleichbar.

Schließlich ist in "Funk-Technik", Band 39 (1984), Heft 5, S. 196, ein elektronischer Umschalter zwischen Fernsehempfang und Videospiel beschrieben, mit dessen Hilfe entweder ein Spielsignal oder ein Antennensignal auf den Eingang eines Fernsehgerätes gelegt werden kann. Der bekannte, elektronische Antennenumschalter bildet in seiner Funktion einen zweipoligen HF-Schalter, der mit Hilfe einer Anzahl Pin-Dioden entweder den einen Eingang oder den anderen Eingang sperrt. Der bekannte Umschalter ist naturgemäß lediglich mit einem Ausgang ausgerüstet. Eine fernadressierbare Ansteuerung mit Hilfe eines extern erzeugten Stroms codierter Steuerbefehle zur Versorgung einer ausgewählten Anzahl von Teilnehmern mit ausgewählten Fernsehprogrammen ist weder möglich noch notwendig.

Benachbarte Wohneinheiten werden typischerweise mit Fernsehsignalen aus einer Gemeinschaftsantennenanlage versorgt. Mit einer Zunahme von Gemeinschaftsantennenanlagen auch im ländlichen Raum ist zu rechnen, weil die Aufstellung grösserer Parabolantennen zum Empfang der von Satelliten abgestrahlten Fernsehsignale voraussichtlich Beschränkungen unterliegen wird. Zunehmend werden Fernsehsignale auch über Breitbandkommunikationskabelnetze bereitgestellt. Es ist wünschenswert, für begrenzte Teilnehmerzahlen von beispielsweise 10 bis 100 Wohneinheiten, ein einfaches, preiswertes Verteilsystem zu schaffen, das dem Teilnehmer wahlweise die Fernsehprogramme aus der Gemeinschaftsantennenanlage und/oder aus dem Breitbandkabelkommunikationsnetz zur Verfügung stellt, wobei eine einfache durch den einzelnen Teilnehmer nicht störbare Umstellung zwischen verschiedenen Empfangsberechtigungen möglich sein soll.

Davon ausgehend besteht die Aufgabe der vorliegenden Erfindung darin, einen fernadressierbaren Sternverteiler bereitzustellen, über den eine Anzahl Teilnehmer wahlweise mit Fernsehprogrammen aus verschiedenen Quellen versorgt werden kann.

Ausgehend von einem fernadressierbaren Sternverteiler mit den oben angegebenen Merkmalen ist die erfindungsgemäße Lösung dieser Aufgabe dadurch gekennzeichnet, daß ein zweiter Eingang vorhanden ist, der aus einer anderen Quelle mit Fernsehsignalen versorgbar ist, jedes Schaltmittel den zugeordneten Ausgang wahlweise mit dem ersten Eingang oder mit dem zweiten Eingang verbindet oder von beiden Eingängen trennt, und jedem Schaltmittel ein einstellbarer Adressierchip zugeordnet ist, der aus einem extern erzeugten Strom codierter Steuerbefehle bestimmt codierte Steuerbefehle auswählt und demjenigen Schaltmittel zuführt, für das bzw. für den angeschlossenen Teilnehmer diese Steuerbefehle bestimmt sind.

Vorteilhafte Ausgestaltungen und Weiterbildungen der Erfindung ergeben sich aus den Unteransprüchen.

So ist vorzugsweise vorgesehen, daß die Eingänge, die Schaltmittel, die Ausgänge und die Verbindungsleitungen für die Übertragung von HF-Signalen im Frequenzbereich von 0,1 bis 860 MHz ausgelegt sind, und wenigstens ein Übersprechabstand von 65 dB zwischen elektrisch getrennten Einrichtungen gewährleistet ist.

Vorzugsweise sind die beiden Eingänge und die Anzahl Ausgänge an einer Platine angeordnet, und die Schaltmittel sind mit den Eingängen und den Ausgängen über Verbindungsleitungen verbunden, welche als Leiterbahnen einer gedruckten Schaltung ausgebildet sind. Durch bestimmte räumliche Ausbildung und Anordnung dieser Leiterbahnen kann dieser Übersprechabstand gewährleistet werden. Gerade bei einer kompakten Bauweise des Sternverteilers muß im Einzel fall die richtige Ausbildung und Anordnung der Leiterbahnen empirisch mit einigen wenigen Versuchen ermittelt werden. Die praktische Realisierung der vorliegenden Erfindung bestätigt jedoch, daß getrennte Frequenzbereiche an verschiedenen, räumlich benachbarten Ausgängen und ein ausreichender Übersprechabstand von wenigstens 65 dB an einem kompakten Gerät erzielbar sind, dessen Leiterbahnen in Form einer gedruckten (geätzten) Schaltung aufgebaut sind.

Es hat sich als zweckmäßig erwiesen, an jedem Sternverteiler acht Ausgänge vorzusehen. Zur Versorgung größerer Teilnehmerzahlen können mehrere Sternverteiler in Reihe geschaltet werden.

Der einstellbare Adressierchip erzeugt vorzugsweise eine bestimmte Bitfolge. Bekannte Adressierchips weisen beispielsweise acht durchtrennbare Brücken auf. Zur Vornahme einer Einstellung werden bestimmte Brücken durchtrennt, so daß an den hiervon festgelegten Stellen einer Bit-Folge eine "0" auftaucht. Die restlichen Brücken bleiben stromführend und liefern an den entsprechenden Stellen der Bit-Folge eine "1". So läßt sich jedem Schaltmittel einfach und schnell eine Adressierung entsprechend einer ganzzahligen Zahl von 1 bis 256 zuordnen. Jeder Adressierchip ist über ein Schieberegister mit einer Leitung verbunden, über welche der Strom der codierten Steuerbefehle übertragen wird. Bei Übereinstimmung zwischen Adressenteil des Steuerbefehls und der im Adressierchip erzeugten Bitfolge wird der bestimmte Steuerbefehl über das Schieberegister einem Signalgenerator zu geführt, welcher die verschiedenen Steuerspannungen für das Schaltmittel erzeugt.

Es ist möglich, die codierten Steuerbefehle über die Fernsehsignale führende Leitung zu übertragen. Die Umsetzung in das dafür vorgesehene Frequenzband von beispielsweise 75 MHz, die Einspeisung über Weichen und die Auskoppelung über Koppelglieder erfordert vergleichsweise teure Einrichtungen, die für die Versorgung kleiner Teilnehmerzahlen von beispielsweise 10 bis 100 Wohneinheiten aus Kostengründen nicht zweckmäßig ist. In diesem Falle ist es zweckmäßiger, für die Übertragung der codierten Steuerbefehle ein zusätzliches Leitungsnetz vorzusehen.

Zusätzlich zu dem ersten HF-Eingang und dem zweiten HF-Eingang, denen Fernsehsignale aus verschiedenen Quellen zuführbar sind, weist der erfindungsgemäße Sternverteiler vorzugsweise wenigstens einen weiteren getrennten Eingang auf, über welchen codierte Steuerbefehle und Spannungen zur ausgewählten Betätigung der Schaltmittel zuführbar sind. Über gedruckte Leiterbahnen sind die verschiedenen Adressierchips parallel an diesen weiteren Eingang angeschlossen. Als weiterer Eingang hat sich beispielsweise ein 6-poliger Stecker gut bewährt.

Die codierten Steuerbefehle werden in einer Kontrolleinrichtung erzeugt. Je nach Anzahl der zu versorgenden Teilnehmer und/oder Umfang der angebotenen Serviceleistungen kann hierzu ein einfaches Telefonmodem ausreichen, oder es ist ein Personalcomputer vorgesehen, der wahlweise mit einer Speichereinrichtung ausgerüstet ist. Typischerweise ist der erfindungsgemäße Sternverteiler für eine Ein-Wege-Kommunikation von der Kontrolleinrichtung zu einem oder mehreren Sternverteilern eingerichtet. Alternativ können auch zusätzliche Ein- und Ausgänge für die Übermittlung von Rückmeldungen des Teilnehmers an die Zentraleinheit vorgesehen werden. In diesem Sinne kann der erfindungsgemäße Sternverteiler auch für eine Zwei-Wege-Kommunikation ausgerüstet werden.

Für die Übertragung der Fernsehsignale von den verschiedenen Quellen zum ersten bzw. zweiten Eingang des Sternverteilers und zur Weiterleitung der freigegebenen Fernsehsignale von den Ausgängen zu den Anschlußdosen in den einzelnen Wohneinheiten dienen typischerweise Koaxialkabel. Vorzugsweise sind deshalb die beiden HF-Eingänge und die Anzahl HF-Ausgänge am erfindungsgemäßen Sternverteiler als Koaxialkabel-Anschlußbuchsen ausgebildet. Wie bereits gesagt, sind vorzugsweise acht solche HF-Ausgänge vorgesehen, von denen jeder als Koaxialkabel-Anschlußbuchse ausgebildet ist.

Insbesondere, wenn der erfindungsgemäße Sternverteiler auch in Verbindung mit Pay-TV-Systemen eingesetzt werden soll, ist es zweckmäßig, zusätzlich die Zuführung von Störfrequenzen vorzusehen. Für einen solchen Fall kann an einem Sternverteiler vorzugsweise zusätzlich ein Störoszillator angebracht werden. Es ist ein Störfrequenzeingang vorgesehen, von dem Leiterbahnen zu jedem Schaltmittel führen. Nach Maßgabe der zugeführten Steuerbefehle kann wahlweise gezielt ein bestimmter Ausgang in einem vorgegebenen Frequenzbereich mit einer Störfrequenz belegt werden, so daß innerhalb dieses gestörten Bereiches ein Fernsehkanal oder mehrere Fernsehkanäle nicht empfangen werden kann/können.

Die jedem Ausgang des erfindungsgemäßen Sternverteilers zugeordneten Schaltmittel sind vorzugsweise als zweipolige HF-Schalter ausgebildet, wobei jeder nicht-benutzte Schalterpol wirksam an einen Abschlußwiderstand angeschlossen ist. Typischerweise handelt es sich beim Abschlußwiderstand um einen 75 Ohm-Widerstand, wie er üblicherweise in Fernsehverteilanlagen vorgesehen ist. Der Abschlußwiderstand verhindert Reflexionen, Stehwellen u.dgl. am nichtbenutzten Schalterpol. Das Schaltglied solcher zweipoligen HF-Schalter kann mechanisch arbeiten; in diesem Falle können bekannte HF-Relais eingesetzt werden. Alternativ kann eine Diodenanordnung, insbesondere eine Pin-Dioden-Schaltung als HF-Schalter verwendet werden. Auch die Auswahl der HF-Schalter erfolgt mit der Maßgabe, daß der Übersprechabstand zwischen den beiden Schalterpolen wenigstens 65 dB beträgt. Auf diese Weise kann ein Übersprechen vom ersten HF-Eingang auf den zweiten HF-Eingang und umgekehrt sicher vermieden werden. An jedem Ausgang liegt ungestört das Fernsehsignal an, das nach Maßgabe der Teilnehmerberechtigung über die Kontrolleinrichtung vorgegeben ist.

Das Schaltmittel kann in Form eines Blockes aufgebaut sein, der über je einen Eingang mit dem ersten und mit dem zweiten Eingang für Fernsehsignale verbunden ist. Der Ausgang eines solchen Schaltmittelblockes ist mit dem jeweiligen Ausgang verbunden, an welchen die Teilnehmerleitung anschließbar ist. Alternativ kann das jedem Ausgang zugeordnete Schaltmittel aus zwei getrennten Schaltern bestehen, die jeweils zwischen dem ersten Eingang für Fernsehsignale und diesem Ausgang, sowie zwischen dem zweiten Eingang für Fernsehsignale und diesem Ausgang zugeordnet sind.

Nachstehend wird die Erfindung mehr im einzelnen anhand einer bevorzugten Ausführungsform mit Bezugnahme auf die Zeichnungen erläutert; die letzteren zeigen:

Figur 1 eine schematische Schrägansicht eines erfindungsgemäßen Sternverteilers; und

Figur 2 anhand eines Blockdiagramms den Schaltungsaufbau des Sternverteilers nach Fig. 1.

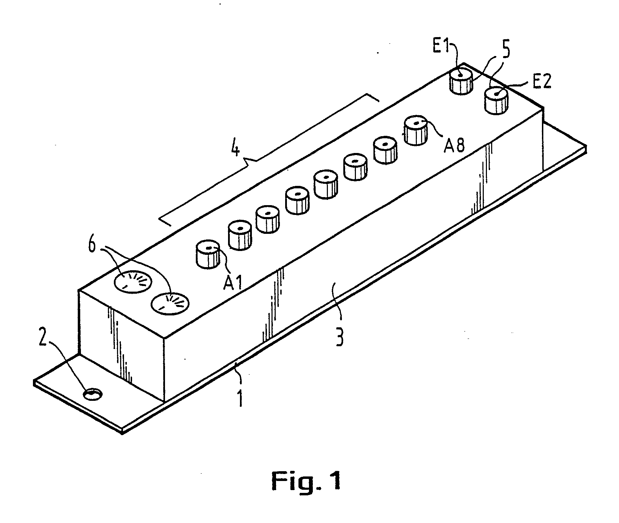

Wie aus Fig. 1 ersichtlich, weist der Sternverteiler eine Grundplatte 1 auf, auf der ein Gehäuse 3 befestigt ist, das die elektrischen und elektronischen Komponenten aufnimmt. Über Befestigungslöcher 2 kann der Sternverteiler an einer Wand oder dergleichen befestigt werden. Bei der hier dargestellten, bevorzugten Ausführungsform weist die Platte 1 rechteckige Abmessungen mit einer Länge von 320 mm und einer Breite von 60 mm auf. Für das Gehäuse 3 ist die gleiche Breite und eine Höhe von 40 mm vorgesehen. Längs einer Mittellinie stehen von der Oberseite des Gehäuses 3 acht im Abstand zueinander angeordnete Koaxialkabel-Anschlußbuchsen 4 ab, welche die Ausgänge A1 bis A8 zum Anschluß der Teilnehmerleitungen bilden. Zwei weitere Koaxialkabel-Anschlußbuchsen 5 bilden den Eingang E1 und E2, über welche der Sternverteiler mit Fernsehsignalen aus verschiedenen Quellen versorgbar ist. Weiterhin sind zwei 6-polige Stecker 6 vorgesehen, über welche die im Gehäuse angeordneten Adressierchips mit Spannung und Bitrate versorgt werden können.

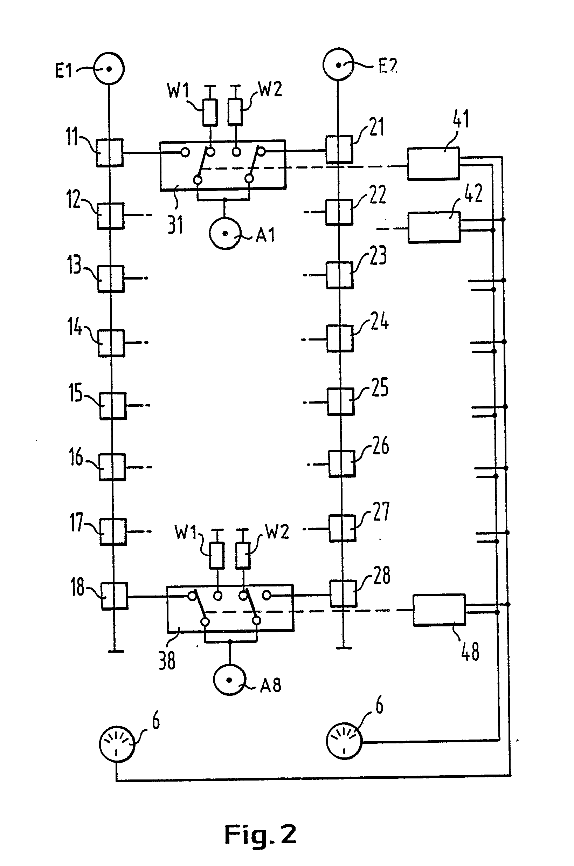

Fig. 2 zeigt schematisch den Schaltungsaufbau des dargestellten Sternverteilers. Mit dem Eingang E1 sind in Reihenschaltung die Abzweiger 11, 12, ... 18 verknüpft. In gleicher Weise sind mit dem Eingang E2 in Reihenschaltung die Abzweiger 21, 22, ... 28 verknüpft. Zwischen einander zugeordnete Abzweiger 11, 21; 12, 22; ... 18, 28 ist jeweils ein Schaltmittel 31, 32, ... 38 eingesetzt. Jedes Schaltmittel 31, 32, ... 38 ist als zweipoliger Schalter ausgebildet. Je ein HF-Schaltmitteleingang ist mit dem zugeordneten Abzweiger 11, 12, ... 18 bzw. 21, 22, ... 28 verbunden. Ferner weist jedes Schaltmittel 31, 32, ... 38 einen HF-Schaltmittelausgang auf, der mit dem zugeordneten Ausgang A1, A2, ... A8 verknüpft ist. Weiterhin sind jedem Schaltmittel 31, 32, ... 38 je zwei Widerstände W1, W2 zugeordnet, die einen Abschlußwiderstand für den nichtbenutzten Schaltmittelpol bilden.

Weiterhin ist jedem Schaltmittel 31, 32, ... 38 ein Adressierchip 41, 42, ... 48 zugeordnet; sämtliche Adressierchips 41, 42, ... 48 sind in je einer Reihenschaltung mit den beiden Stecker-Eingängen 6 zur Versorgung der Adressierchips mit Spannung und Bitrate verknüpft.

Sämtliche Verbindungsleitungen zwischen den einzelnen Komponenten sind als Leiterbahnen einer gedruckten Schaltung ausgebildet. Es ist eine solche Anordnung und Ausbildung dieser Leiterbahnen gewählt, daß der Übersprechabstand zwischen den beiden Zweigen gemäß Eingang E1 und Eingang E2 wenigstens 65 dB beträgt. Als Schaltmittel dienen im vorliegenden Falle bekannte HF-Relais.

Auch die weiteren Bauteile und Komponenten des erfindungsgemäßen Sternverteilers einschließlich der Adressierchips sind handelsüblich.

## Ansprüche

1. Fernadressierbarer Sternverteiler,
mit einem ersten Eingang, der an eine, Fernsehsignale führende Leitung anschließbar ist,
mit einer Anzahl Ausgänge, an die je eine Teilnehmerleitung anschließbar ist,
wobei jedem Ausgang ein ansteuerbares Schaltmittel zugeordnet ist, das nach Maßgabe zugeführter Steuerbefehle eine HF-Verbindung zwischen dem ersten Eingang und diesem Ausgang herstellt oder unterbricht,
dadurch gekennzeichnet, daß
ein zweiter Eingang (E2) vorhanden ist, der aus einer anderen Quelle mit Fernsehsignalen versorgbar ist;
jedes Schaltmittel (31, 32, ... 38) den zugeordneten Ausgang (A1, A2, ... A8) wahlweise mit dem ersten Eingang (E1) oder mit dem zweiten Eingang (E2) verbindet oder von beiden Eingängen (E1, E2) trennt; und
jedem Schaltmittel (31, 32, ... 38) ein einstellbarer Adressierchip (41, 42, ... 48) zugeordnet ist, der aus einem extern erzeugten Strom codierter Steuerbefehle bestimmt codierte Steuerbefehle auswählt und dem Schaltmittel (31, 32, ... 38) zuführt.

2. Sternverteiler nach Anspruch 1,
dadurch gekennzeichnet, daß
die Eingänge (E1, E2), die Schaltmittel (31, 32, ... 38), die Ausgänge (A1, A2, ... A8) und die Verbindungsleitungen für die Übertragung von HF-Signalen im Frequenzbereich von 0,1 bis 860 MHz ausgelegt; und
wenigstens ein Übersprechabstand von 65 dB zwischen den elektrisch getrennten Einrichtungen gewährleistet ist.

3. Sternverteiler nach Anspruch 1 oder 2,
dadurch gekennzeichnet, daß
die beiden Eingänge (E1, E2) und die Anzahl der Ausgänge (A1, A2, ... A8) an einer Platine angeordnet sind; und die Schaltmittel (31, 32, ... 38) mit den Eingängen (E1, E2) und den Ausgängen (A1, A2, ... A8) über Verbindungsleitungen verbunden sind, die als Leiterbahnen einer gedruckten Schaltung ausgebildet sind, die aufgrund ihrer Ausbildung und/oder Anordnung einen Übersprechabstand von mehr als 65 dB gewährleisten.

4. Sternverteiler nach einem der Ansprüche 1 bis 3,
dadurch gekennzeichnet, daß
jedes Schaltmittel (31, 32, ... 38) als zweipoliger HF-Schalter ausgebildet ist; und
jeder nicht-benutzte Schalterpol an einen Abschlußwiderstand (W1, W2) angeschlossen ist.

5. Sternverteiler nach einem der Ansprüche 1 bis 4,
dadurch gekennzeichnet, daß
acht Ausgänge (A1, A2, ... A8) ausgebildet sind, an die je eine Teilnehmerleitung anschließbar ist.

6. Sternverteiler nach einem der Ansprüche 1 bis 5, dadurch gekennzeichnet, daß
die beiden Eingänge (E1, E2) und die Anzahl Ausgänge (A1, A2, ... A8) als Koaxialkabel-Anschlußbuchsen ausgebildet sind.

7. Sternverteiler nach einem der Ansprüche 1 bis 6,
dadurch gekennzeichnet, daß
zusätzlich wenigstens ein weiterer Eingang (6) vorhanden ist, über den sämtliche Adressierchips (41, 42, ... 48) mit Spannung und Steuerbefehlen versorgbar sind.

8. Sternverteiler nach einem der Ansprüche 1 bis 7
dadurch gekennzeichnet, daß
zusätzlich am Sternverteiler ein Störoszillator anbringbar ist; und
vom Störfrequenzeingang Leiterbahnen zu jedem Schaltmittel führen, um wahlweise gezielt einen bestimmten Aus gang in einem vorgegebenen Frequenzbereich mit einer Störfrequenz zu belegen.

9. Sternverteiler nach Anspruch 8,
dadurch gekennzeichnet, daß
die Belegung eines bestimmten Ausgangs (A1, A2, ... A8) mit der Störfrequenz nach Maßgabe extern erzeugter und zugeführter, codierter Steuerbefehle über die Adressierchips (41, 42, ... 48) und die Schaltmittel (31, 32, ... 38) steuerbar ist.

10. Verwendung eines Sternverteilers nach einem der Ansprüche 1 bis 9,
wobei der eine HF-Eingang (E1) an eine Gemeinschaftsantennenanlage und der andere HF-Eingang (E2) an einen Übergabepunkt eines Breitbandkommunikationskabelnetzes angeschlossen ist.

11. Verwendung des Sternverteilers nach Anspruch 10,
wobei der weitere Eingang (6) mit Steuerbefehlen aus einer Kontrolleinrichtung versorgt wird.

12. Verwendung des Sternverteilers nach Anspruch 11,
wobei als Kontrolleinrichtung ein Telefenmodem, ein FSK-Controller oder ein Personalcomputer dient.

13. Verwendung nach einem der Ansprüche 10 bis 12,
wobei etwa 10 bis 100 Wohneinheiten mit Fernsehsignalen aus unterschiedlichen Quellen über eine Anzahl Sternverteiler versorgt werden.

14. Verwendung nach Anspruch 13,
wobei mehrere Sternverteiler in Reihe geschaltet sind.

**Fig. 1**

**Fig. 2**

## EUROPÄISCHER RECHERCHENBERICHT

Nummer der Anmeldung

EP 89121669.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE - A1 - 2 714 774 <br> (ROBERT BOSCH) <br> * Fig. 1,2; Seite 6, Zeile 1 - Seite 7, Zeile 14 * <br> -- | 1 | H 04 N 5/268 <br> H 04 N 7/10 <br> H 04 N 7/16 |
| Y,D | FERNSEH- UND KINO-TECHNIK, 32. Jahrgang, Nr. 10, 1978, München, Heidelberg <br> F.SENF "Mehrstufige Kreuz-schaltfelder sowie PCM--Kommandovermittlungen für Seiten 383-387 <br> * Seite 383, Bild 1 * <br> -- | 1 | |
| A | DE - B - 1 169 503 <br> (SIEMENS) <br> * Fig. 1 * <br> -- | 1,2 | |
| A | DE - A1 - 2 457 492 <br> (PHILIPS) <br> * Fig. 3 * <br> -- | 1,2 | RECHERCHIERTE SACHGEBIETE (Int. Cl.4) |
| A | DE - A1 - 2 558 147 <br> (OAK) <br> * Fig. 2; Seite 5, Zeilen 5-23 * <br> ---- | 1,8 | H 04 N 5/00 <br> H 04 N 7/00 |

Der vorliegende Recherchenbericht wurde für alle Patentansprüche erstellt.

| Recherchenort | Abschlußdatum der Recherche | Prüfer |
|---|---|---|
| WIEN | 25-01-1990 | BENISCHKA |